# EUROPEAN PATENT APPLICATION

(11) **EP 2 375 160 A2**
(43) Date of publication of application: **12.10.2011**
(21) Application number: 11002887.5
(22) Date of filing: 06.04.2011
(51) Int. Cl.: F23R 3/00

(54) **Angled seal cooling system**

(30) Priority: 06.04.2010 US 755137
(71) Applicant: Gas Turbine Efficiency Sweden AB, 175 27 Järfälla (SE)
(72) Inventor: Bland, Robert, Oviedo, FL 32765 (US); Battaglioli, John, Ballston Lake, NY 12019 (US); Barnes, John, Niskayuna, NY 12019 (US); Hamer, Andrew, Columbia Maryland 21044 (US)
(74) Representative: Kotitschke, Bernd

(57) **Abstract**

An aft liner seal (20) for a combustor for a gas turbine includes an inner shell (30) having an inner and outer surface and central axis. The aft liner seal has an outer shell (38) positioned over the inner shell that has an inner and outer surface and central axis coaxial with the inner shell. One of the outer surface of the inner shell or the inner surface of the outer shell has grooves (36) angled relative to the central axis. The angled grooves and adjacent portions of the inner surface of the outer shell or the outer surface of the inner shell form cooling passages. The cooling air exits the cooling passages at an exit angle that is matched to a swirl angle of the combustor flow. Matching of the exit angle and the swirl angle minimizes shear of cooling air with respect to flow exiting the combustor liner.

## Description

### SPECIFICATION

### BACKGROUND OF THE INVENTION

The present invention is directed to gas turbine combustors. More particularly, the present inventions is directed to improved cooling of aft liner seals for gas turbine combustors.

Seals in combustors are required to minimize leakage at joins between components. Combustors are generally made in several pieces to ease manufacture and maintenance. In addition, seals are often on surfaces where sliding is allowed in order to minimize thermal mismatches.

The overriding philosophy in seal design in modern dry low NOx (DLN) combustors has been to create a good seal and then provide a controllable leakage/cooling flow to maintain it in a workable operating regime. Many of the spring alloys, such as X-750 have a temperature limit above which the seals lose their temper and thus fail to seal. This approach is taken to minimize the amount of air leakage through the seal region and to make that leakage consistent between combustors. If the seal leaked, it would typically do so along a long narrow annular gap, which is difficult to control with any accuracy. The cooling designs typically have machined holes or slots which can be accurately placed and controlled.

Excess leakage is bad for several reasons. It typically occurs downstream of the combustion zone and thus raises the combustion zone temperature, which increases NOx output. In addition, depending on where the leakage is relative to the flame and burnout zone, leakage can freeze out CO and thus limit the turndown capabilities of the combustor.

One common method of cooling a seal is a channel based scheme. In this design an axial channel groove is cut into an inner metal panel, the other side of which is in contact with the hot gas in the combustor. In order to guide or force the flow along the channel, an outer sleeve is placed over the outer radial side of the channel. The flow thus enters from the passage that feeds the head end of the combustor and exhausts into the inside of the liner, diluting the hot gas. This methodology has been used by, for example, MHI/Siemens to cool the liner and aft end liner seal.

Similarly, as shown in FIGS. 2 and 3, U.S. Patent No. 5,724,816 (Ritter et al.) is directed to a design that protects an aft end liner seal. Here, a combustor /transition piece for a gas turbine is provided that includes a double walled structure having a plurality of axial cooling channels. Additionally, circumferential cross-flow passages are positioned between the structure's inner member and the outer member to provide cooling air. The cooling channels are formed in the area between an inner member and an outer member of the combustor. The passages preferably extend both axially and circumferentially with respect to the direction of flow through the combustor/transition piece. The axial passages extend completely from one end to the other and the circumferential passages extend around the circumference of the combustor/transition piece. The circumferential cross-flow passages are to prevent combustor/transition piece part failure due to axial passage inlet blockage without affecting normal, unblocked cooling. Double wall cooling structures are constructed using two unbonded members. The inner member is machined to form cooling passages. Double wall cooling structures are also constructed using two members shrink-fitted and then bonded together such as by welding. The inner member is machined to form the cooling passages.

In these types of prior art systems, slots are cut axially. These axial slots are relatively easy to manufacture. For example, an end mill cuts the groove and then the part is indexed to the next location and the process repeated until the part is finished.

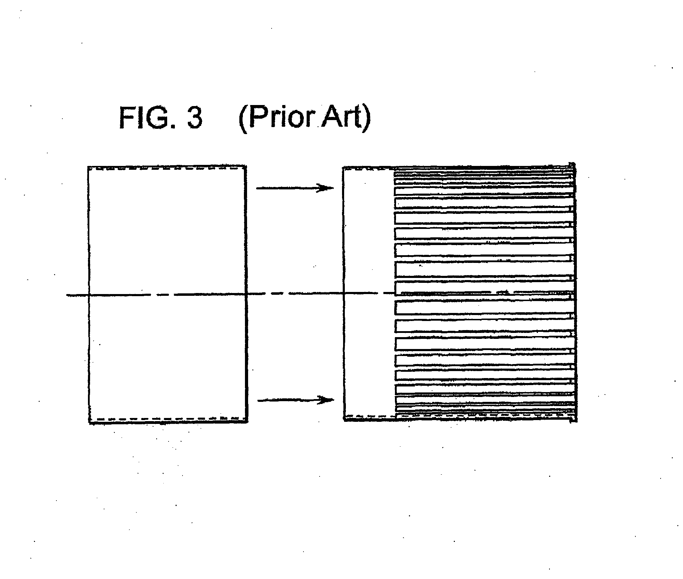

Additional improvements have been suggested. For example, U.S. Patent No. 7,010,921 (Intile et al.) is directed to a method and apparatus for cooling a combustor liner and transition piece of a gas turbine. The liner has circular ring turbulators arranged in an array axially along a length of the combustor liner and is located on an outer surface. A first flow sleeve surrounds the combustor liner with a first flow annulus therebetween including a plurality of axial channels extending over a portion of an aft end portion of the liner parallel to each other (see figure 3 of the Intile patent). The cross-sectional area of each channel is either constant or varies along the length of the channel. Here, the channel height varies along its length to try to counter heat build up by accelerating the flow to enhance the heat transfer coefficient.

Other related patents include U.S. Patent No. 7,269,957 (Martling et al.) which is directed a gas turbine combustion liner having an interface region between it and a transition duct where the region of the combustion liner proximate its second end comprises a plurality of spring seals that seal against a transition duct while admitting a cooling fluid to pass into a passage. The passage is formed between the combustion liner and spring seals and feeds a plurality of cooling holes located in the combustion liner proximate the liner second end. Depending on cooling requirements, the cooling holes can be angled both axially and circumferentially to maximize the cooling effectiveness. This system performs seal cooling by replacing the channel cooling described above with effusion cooling with cooling holes in two dimensions, axial and circumferential. This is done to maximize the length of the hole through the thin metal sheet that is used in liner construction. It is thus aiming to benefit purely from a geometrical effect to lengthen the cooling channel.

U.S. Patent No. 4,078,604 (Christl et al.) is directed to heat exchanger wall construction, such as used for combustion chambers for liquid fueled rocket engines. The wall construction consists of an inner wall with longitudinally extending cooling channels spaced apart by webs. The cooling channels are open on one surface of the inner wall. An outer wall contacts the webs of the inner wall to form a closure over openings forming cooling channels.

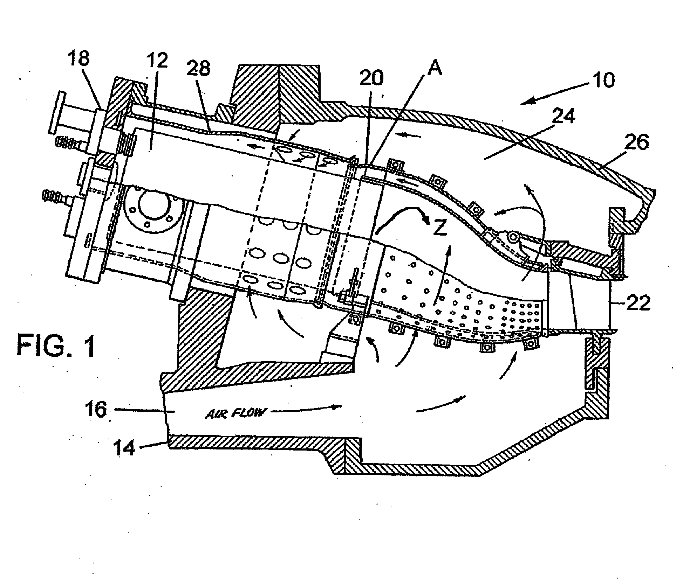

U.S. Patent No. 4,719,748 (Davis, Jr. et al.) is directed to a transition duct in a gas turbine engine that is cooled by impingement jets formed by apertures in a sleeve spaced a distance from the surface to be cooled. The sleeve is configured so as to duct spent impingement air towards the combustor, where it can be subsequently used for mixing with, and for combustion of, the fuel, or for cooling of the combustor. The combination of variations in distance, aperture size, and inter-aperture spacing is utilized to vary the impingement cooling intensity to compensate for the variable internal heat load and also to produce the desired temperature distribution over the surface of the transition duct according to design requirements. Figure 3A of the Davis Jr. patent is reproduced herein, in part, as FIG. 1 and shows a combustor and transition duct employing impingement cooling.

U.S. Patent No. 4,781,019 (Wagner) is directed to a rocket combustor having coolant channels that extend through the combustor walls. A keel-rib extends into each coolant channel from the channel roof for providing smooth and continuous surface transition between the keel rib and adjoining interior surfaces of the coolant channel.

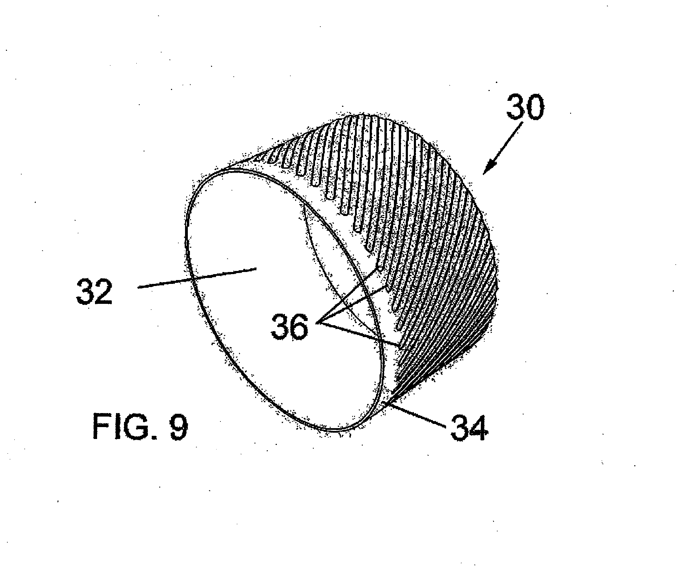

U.S. Patent No. 5,410,884 (Fukue et al.) and European Patent No. EP 0 594 127 B1 are directed to a combustor for a gas turbine. The invention is directed to a system that suppresses the generation of NOx. As can be seen in figures 9(a) and 9(b) of the Fukue patent, each fuel nozzle 34 is constructed of three tubes: the innermost one providing a liquid fuel passage 34a for the liquid fuel, the outermost one providing an air passage 34b for the air, and the intermediate one providing a gaseous fuel passage 34c for the gaseous fuel. A fuel cooling effect is enhanced by the air passage disposed at the outermost side.

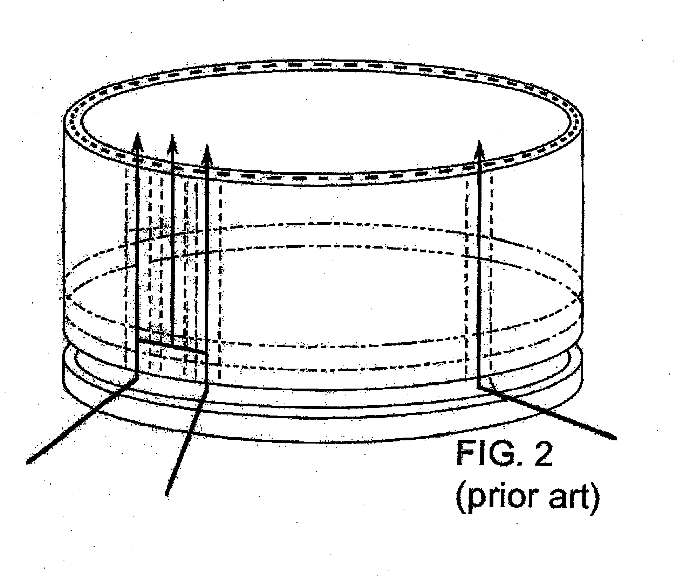

U.S. Patent No. 5,865,030 (Matsuhama) is directed to a gas turbine combustor that prevents an inequality of distribution of temperatures at the outlet of the combustor which might otherwise be caused by cooling air introduced into the combustor. A liner having an outer liner and an inner liner is disposed within a casing of the combustor. The liner is composed of a liner inner cylinder having liner cooling paths and a liner outer cylinder as shown in figure 2. Fuel supplied via upstream side manifolds flows through the liner cooling paths and is discharged from a downstream side manifold after cooling the liner.

Japanese Patent Publication No. 63-243631, by Mitsubishi Heavy Ind., Ltd. is directed to a gas turbine combustor cooling structure that is directed to a system that reduces or eliminates heat related problems by axially parallel inner channels on the inner wall of the outer cylinder.

There is always a desire to maximize the efficiency of use of cooling air in gas turbine combustors. If cooling air can perform two duties instead of one, typically some air can be saved for the head end to reduce the flame temperature and thus emissions or less aerodynamic energy is required to cool parts, which increases the turbine's thermodynamic efficiency.

The air that leaks out of the tail end of the combustor flows onto the surface of the upstream of the transition piece. This flow, although heated in the process of shielding the aft seal from the combusting flow, is significantly cooler than the reacting flow. On exit, its temperature will be in the 1000-1400 degrees Fahrenheit range. If hotter than this range, the metal of the seal and inner liner will be too high with life reducing consequences. At this point, the core combustion gas stream will be of the order of 2600-2700 degree Fahrenheit. The longer that the cool gases can be kept next to the transition piece wall, the lower will be the heat transfer and, thus, the lower the amount of cooling that will need to be applied to the transition.

The current designs, as described above, exhaust axially. With these designs, the combusting gases at this point have a relative swirl angle of approximately 45 degrees. This is a residual of the large amount of swirl imparted at the head end and the swirl breakdown mechanisms in the liner upstream of this point. The vectors of the two flows are therefore significantly different. Consequently, this difference in direction will encourage the two flows to shear against one another. This enhancement in the local levels of turbulence will tend to mix the two streams. Given the much larger amount of the combusting flow (the leakage is equivalent to approximately 1% of the airflow), the boundary layer will be rapidly heated by entering combusting flow and the transition walls in this area will not benefit very much from incoming leakage flow.

It is also noted that swirl will naturally cause the flow to "bloom," i.e., expand in order to rotate about an axis. The flow needs something to react against. This tendency will also help it attach and adhere to the transition piece inner surface.

Historically changes in levels of cooling in this zone have proven to have a significant effect on the life of the downstream transition panels. The ability to use this cooling air more effectively is therefore attractive, assuming it could be done cost effectively.

All references cited herein are incorporated herein by reference in their entireties.

### BRIEF SUMMARY OF THE INVENTION

In a preferred embodiment of the present invention, an aft liner seal for a combustor for a gas turbine is provided that includes an inner shell having an inner surface, an outer surface and a central axis. The aft liner seal further includes an outer shell positioned over the inner shell that has an inner surface, an outer surface and a central axis coaxial with the central axis of the inner shell. The inner surface of the outer shell abuts the outer surface of the inner shell. One of the outer surface of the inner shell or the inner surface of the outer shell has a plurality of helical grooves formed thereon. The helical grooves and adjacent portions of the inner surface of the outer shell or the outer surface of the inner shell form helical cooling passages for providing cooling air to cool the inner shell.

The helical grooves are preferably formed at an angle of twenty to sixty degrees, and, more preferably, at an angle of forty five degrees relative to the central axis of the inner shell. However, the helical grooves may be formed at an angle approximately equal to an average near surface combustor flow angle. Preferably, the inner shell is integral to the outer shell, such as the outer shell is shrink fitted to the inner shell.

In another embodiment of the present invention, an aft liner seal for a combustor liner for a gas turbine is provided that includes an inner shell having an inner surface an outer surface and a central axis. The aft liner seal further has an outer shell positioned over the inner shell. The outer shell has an inner surface, an outer surface, and a central axis coaxial with the central axis of the inner shell. The inner surface of the outer shell abuts the outer surface of the inner shell. One of the outer surface of the inner shell or the inner surface of the outer shell has a plurality of grooves formed therein, the grooves being angled relative to the central axis. The plurality of angled grooves and adjacent portions of the inner surface of the outer shell or the outer surface of the inner shell form a plurality of cooling passages. The cooling passages provide cooling air to cool the inner shell. The cooling air exits the cooling passages at an exit angle. The exit angle is matched to a swirl angle of flow exiting from the combustor liner. Matching of the exit angle and the swirl angle minimizes shear of the cooling air with respect to the flow exiting the combustor liner.

Again, the helical grooves are preferably formed at an angle of twenty to sixty degrees, and, more preferably, at an angle of forty five degrees relative to the central axis of the inner shell. However, the helical grooves may be formed at an angle approximately equal to an average near surface combustor flow angle. Preferably, the inner shell is integral to the outer shell, such as the outer shell is shrink fitted to the inner shell.

A gas turbine is also provided that includes a compressor for supplying compressed air, a plurality of combustors for receiving compressed air from the compressor and fuel through a fuel nozzle associated with each combustor to provide hot products of combustion, a turbine for receiving the hot products of combustion from the combustors, and a plurality of combustion aft liner seals. Each aft liner seal includes an inner shell having an inner surface and outer surface. An outer shell is positioned over the inner shell that has an inner surface and an outer surface. One of the outer surface of the inner shell or the inner surface of the outer shell has a plurality of helical grooves formed thereon. The plurality of helical grooves and adjacent portions of the inner surface of the outer shell or the outer surface of the inner shell form a plurality of helical cooling passages. The cooling passages provide cooling air to cool the inner shell.

Again, the helical grooves are preferably formed at an angle of twenty to sixty degrees, and, more preferably, at an angle of forty five degrees relative to the central axis of the inner shell. However, the helical grooves may be formed at an angle approximately equal to an average near surface combustor flow angle. Preferably, the inner shell is integral to the outer shell, such as the outer shell is shrink fitted to the inner shell.

### BRIEF DESCRIPTION OF SEVERAL VIEWS OF THE DRAWINGS

The invention will be described in conjunction with the following drawings in which like reference numerals designate like elements and wherein:
FIG. 1 is a simplified view, partially in cross section, of a combustor having an aft liner seal in accordance with the present invention and the prior art;
FIG. 2 is a perspective view of a prior art aft liner seal having axial grooves;
FIG. 3 is an exploded side view of the prior art aft liner seal having axial grooves of FIG. 2;
FIG. 4 is an isometric view of an aft liner seal for a combustor for a gas turbine in accordance with a preferred embodiment of the present invention;
FIG. 5 is a left side view of the aft liner seal of FIG. 4;
FIG. 6 is an exploded right side view of the aft liner seal of FIG. 4 showing an inner shell and an outer shell, prior to shrinking fitting of the outer shell to the inner s;
FIG. 7 is an isometric cross-sectional view of the aft liner seal of FIG. 4, taken substantially along lines 7- -7 of FIG. 4;
FIG. 8 is a cross-sectional view of the aft liner seal of FIG. 4, taken substantially along lines 8- -8 of FIG. 5;
FIG. 9 is an isometric view of an inner shell of the aft liner seal of FIG. 4;
FIG. 10 is a left side view of the inner shell of FIG. 9;
FIG. 11 is a partial end view of the inner shell of FIG. 9;
FIG. 12 is an isometric view of the outer shell of the aft liner seal of FIG. 4; and
FIG. 13 is an exploded right side view of another embodiment of an aft liner seal showing an inner shell and an outer shell, prior to shrinking fitting of the outer shell to the inner shell, where the outer shell has helical grooves on its inner surface.

### DETAILED DESCRIPTION OF THE INVENTION

A portion of a typical turbine 10 having combustor 12 to which the present invention applies is shown in FIG. 1. See U.S. Patent No. 4,719,748 (Davis, Jr. et al.), the complete specification of which is fully incorporated by reference. However, the present invention is suitable for numerous other types of turbines not specifically shown and described herein. This combustor 12 has several sealing zones, one of which is highlighted as sealing zone A, as being of particular relevance to the present invention. However, it is noted that the present invention may be applicable to any appropriate seal.

As is known, the efficiency of a gas turbine depends on temperatures of the gases produced at various points in the engine. The maximum temperatures of the hot gases in the gas turbine are limited by the thermal operating limits of the metal parts in contact with the hot gases and the system's capability for cooling these parts. In a conventional gas turbine, substantially the entire external surface of the seal of the present invention is exposed to relatively hot discharge air from the turbine's compressor The present invention is directed generally to gas turbines and, more specifically, to cooling an aft liner seal that is used as a conduit to move hot gases from the combustors of a gas turbine to the its turbine. The design of the present invention is directed to maximizing cooling effectiveness of the seal cooling air once the seal exhaust and main combustor flows come into contact. In order to achieve this, the two flows need to be moving with the minimum possible difference in relative swirl angle. Low relative swirl angles result in low shear rates and the lowest possible level of mixing between the two streams. If the supply conditions to the hot and cold circuits allow the matching of velocities as well as swirl angles, then the system will work most efficiently.

The best way of achieving the matching of swirl angles is to angle the cooling channels passing below the seals. For matching purposes, the liner flow of interest is that near the liner walls at the exit end of the liner. It is this flow that will come into contact with the cooling flow exiting the channels downstream of the liner. Since there may be a variation in near wall liner exit flow angle at this point, an average value will need to be taken for use in the design. For purposes of the present invention, the angle of flow here is identified as the "average near surface combustor flow angle." By matching the swirl angle of the near wall liner exit flow, the cooling flow coming out of the channels will have the greatest possible film effectiveness downstream.

The invention will be illustrated in more detail with reference to the following embodiments, but it should be understood that the present invention is not deemed to be limited thereto.

Referring now to the drawings, wherein like part numbers refer to like elements throughout the several views, there is shown in FIG. 1, a gas turbine 10 in accordance with the present invention and the prior art. Gas turbine 10 includes a plurality of combustors 12 (only one is shown for clarity). Combustion air is provided by a compressor 14 (partially shown) that provides compressed air through compressor outlet 16. Fuel and combustion air are injected into each combustor 12 through a fuel nozzle 18 for burning within an associated combustor 12. The hot products of combustion pass through an aft liner seal 20 to the inlet end of a turbine 22.

The combustor 12 and aft liner seal 20 are contained within a plenum 24 formed by outer casing 26. The plenum 24 is provided with compressed air from the compressor 14 via the compressor outlet 16. A flow sleeve 28 may be provided to aid in providing flow along the walls of the combustor 12. The outside of the aft liner seal 20 is convectively cooled by compressed air flowing from the compressor outlet 16 toward the combustor 12.

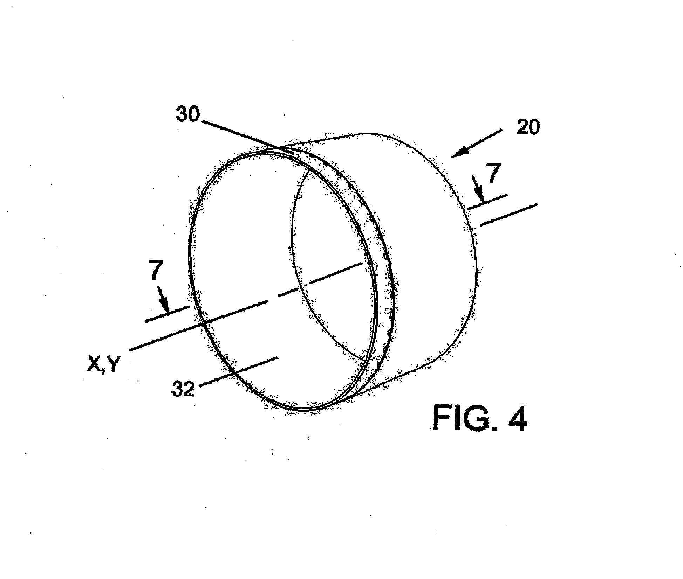

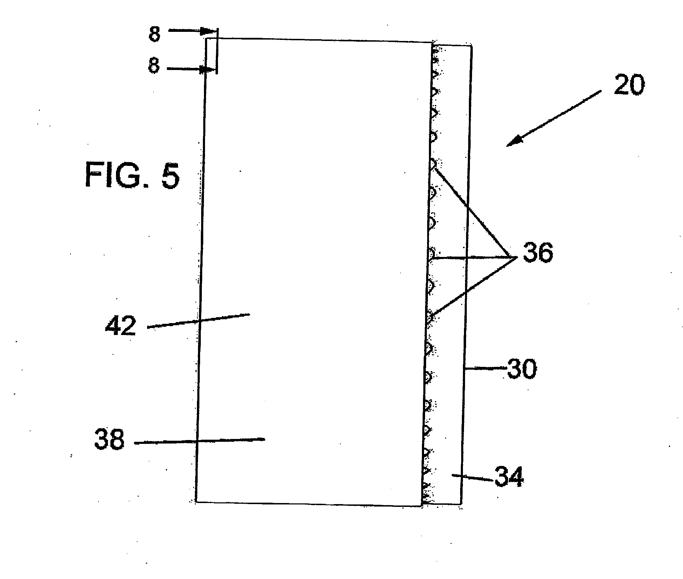

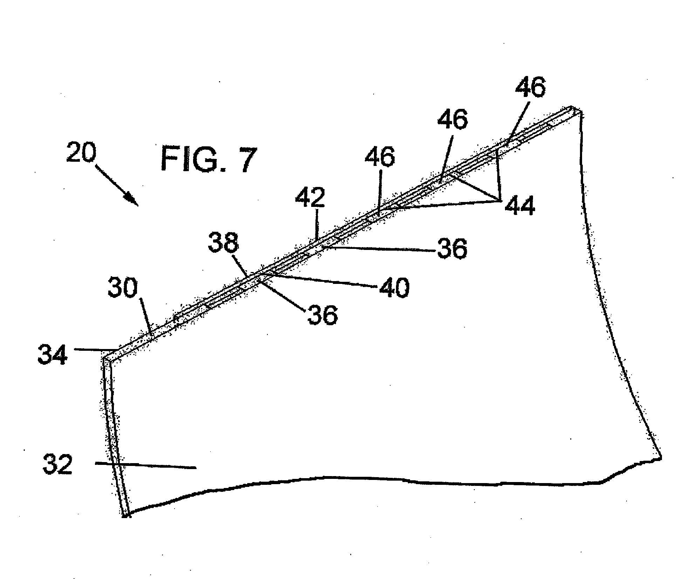

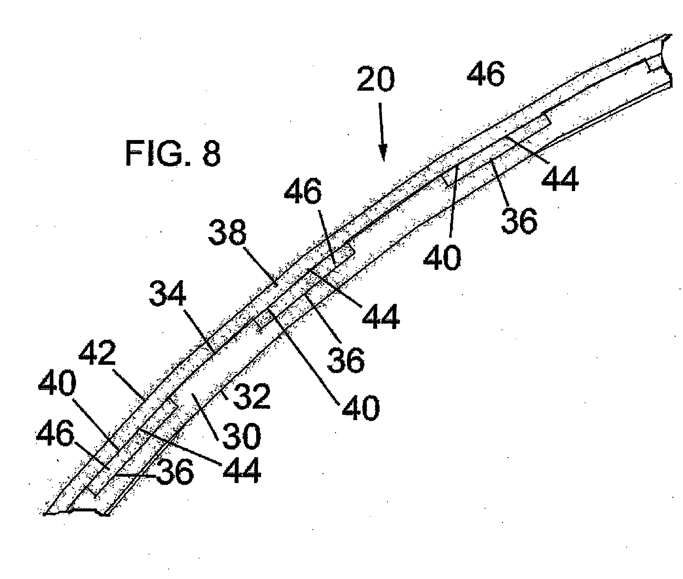

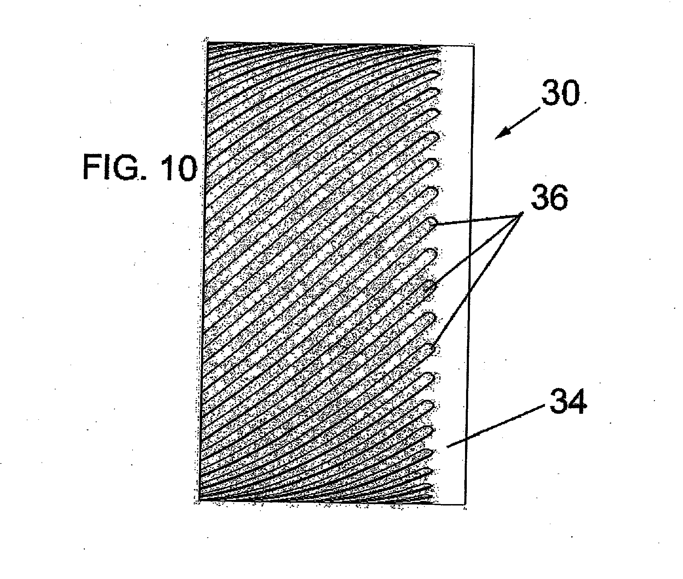

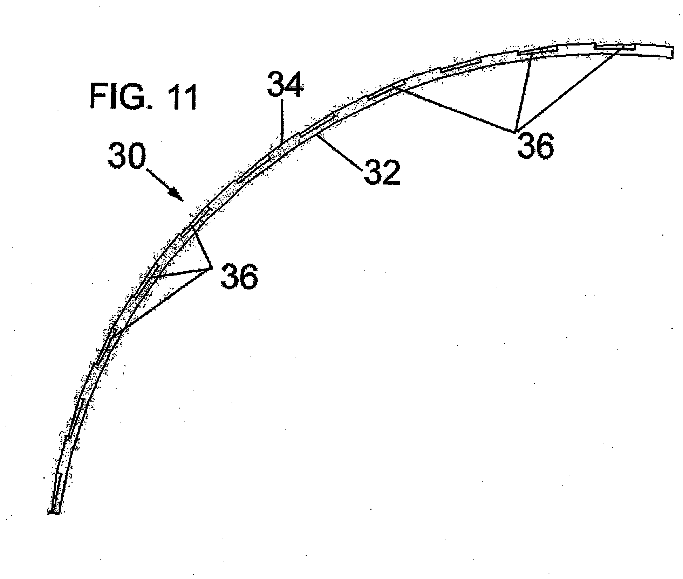

The present invention is directed to the novel aft liner seal 20 with helical cooling passages, as will be described below. As can be seen in FIGS. 4- 8, the aft liner seal 20 includes an inner shell 30 having an inner surface 32, an outer surface 34 and a central axis X. The inner shell is depicted in FIGS. 9-11.

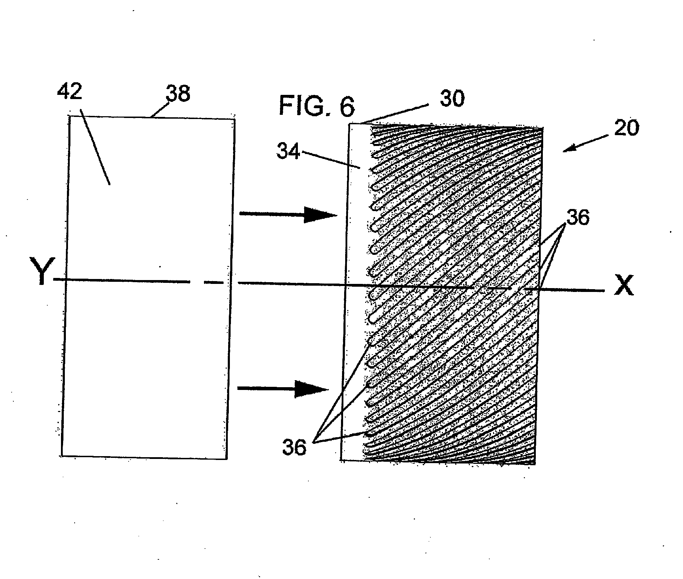

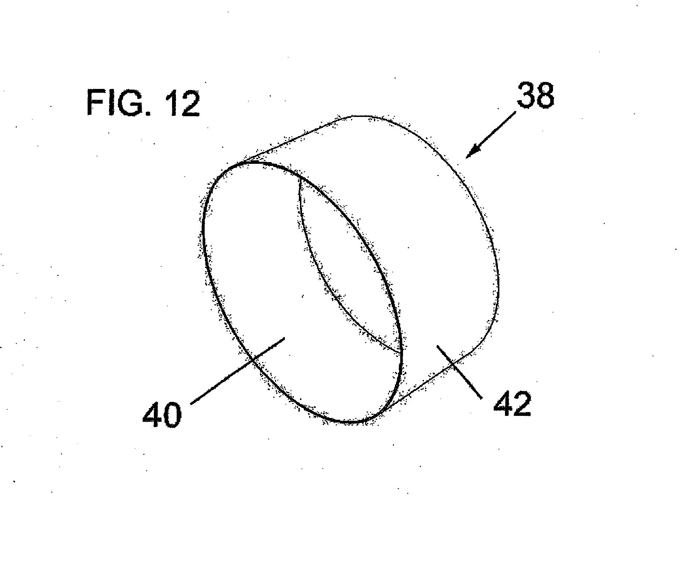

The outer surface 34 of the inner shell 30 of the aft liner seal 20 has a plurality of spaced apart helical grooves 36 formed thereon. As can be seen in FIG. 12 (and best seen in FIG. 6), the aft liner seal 20 further includes an outer shell 38 positioned flush over the inner shell 30. The outer shell 38 has a generally smooth inner surface 40, an outer surface 42, and a central axis Y that is coaxial with said central axis X of said inner shell.

The helical grooves 36 on the inner shell 32 and adjacent portions 44 of the inner surface 40 of said outer shell 38 form a plurality of helical cooling passages 46. The cooling passages 46 provide cooling air to cool the inner shell 30.

The helical grooves 36 are preferably formed at an angle of about forty five degrees. However, any angle between about twenty degrees and sixty degrees relative to the central axis of said inner shell will likely operate having the desirable characteristics of the present invention, depending on combustor head end configuration. Preferably, the inner shell 30 is integral to the outer shell 38. This may be accomplished by shrink fitting, welding, or other processes, as are well known that make the inner shell 30 and outer shell 38 rigid with respect to one another..

While the helical grooves 36 are generally believed to be the most desirable configuration, the goal of the present invention, as stated above, is to have angled cooling passages 46 that that have an exit angle, relative to the central axis X that match angle and velocity of a swirl angle Y of the 12 combustor 12 flow. Such matching of velocities minimizes shear of the cooling air with respect to the combustor 12 flow. Additionally, for purposes of the present invention, the term "helical grooves" is intended to mean any angled or curved configuration, not necessarily having a constant pitch.

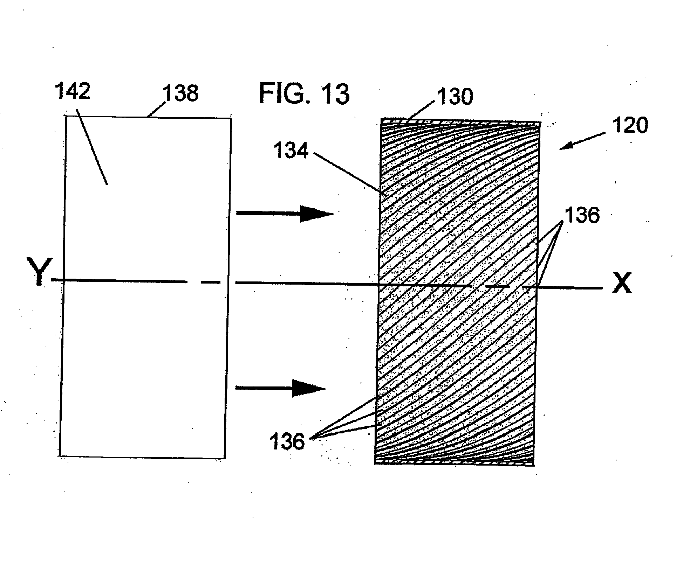

It is noted that while FIGS. 1-12 herein show the helical grooves 36 formed in the outer surface 34 of the inner shell 30, the present invention would operate equally well for an aft liner seal 120 (see FIG. 13) if helical grooves 136 were formed in the inner surface 134 of the outer shell 130, rather than the outer surface 142 of the inner shell 138 as in the embodiment of FIGS. 1-12.

While the invention has been described in detail and with reference to specific examples thereof, it will be apparent to one skilled in the art that various changes and modifications can be made therein without departing from the spirit and scope thereof.

## Claims

1. An aft liner seal for a combustor for a gas turbine, comprising:
(a) an inner shell having an inner surface, an outer surface and a central axis;
(b) an outer shell positioned over said inner shell, said outer shell having an inner surface, an outer surface and a central axis coaxial with said central axis of said inner shell;
(c) said inner surface of said outer shell abutting said outer surface of said inner shell;
(d) one of said outer surface of said inner shell and said inner surface of said outer shell having a plurality of helical grooves formed thereon; and
(e) said plurality of helical grooves and adjacent portions of said inner surface of said outer shell or said outer surface of said inner shell forming a plurality of helical cooling passages, said cooling passages for providing cooling air to cool said inner shell.

2. The aft liner seal of claim 1, wherein the helical grooves are formed at an angle of twenty to sixty degrees relative to the central axis of said inner shell.

3. The aft liner seal of claim 1, wherein the helical grooves are formed at an angle of approximately forty five degrees relative to the central axis of said inner shell.

4. The aft liner seal of claim 1, wherein the helical grooves are formed at an angle approximately equal to an average near surface combustor flow angle.

5. The aft liner seal of claim 1, wherein
(a) the inner shell is integral to the outer shell, and/or
(b) the outer shell is shrink fitted to the inner shell.

6. An aft liner seal for a combustor liner for a gas turbine, comprising:
(a) an inner shell having an inner surface, an outer surface and a central axis;
(b) an outer shell positioned over said inner shell, said outer shell having an inner surface, an outer surface and a central axis coaxial with said central axis of said inner shell;
(c) said inner surface of said outer shell abutting said outer surface of said inner shell;
(d) one of said outer surface of said inner shell and said inner surface of said outer shell having a plurality of grooves formed thereon, said grooves being angled relative to the central axis of the inner shell;
(e) said plurality of angled grooves and adjacent portions of said inner surface of said outer shell or said outer surface of said inner shell forming a plurality of cooling passages, said cooling passages for providing cooling air to cool said inner shell, said cooling air exiting said cooling passages at an exit angle; and
(f) said exit angle matching a swirl angle of flow exiting from the combustor liner, whereby matching of the exit angle and the swirl angle minimizes shear of the cooling air with respect to the flow exiting the combustor liner.

7. The aft liner seal of claim 6, wherein
(a) said exit angle is twenty to sixty degrees, and/or
(b) said exit angle is about 45 degrees.

8. The aft liner seal of claim 6, wherein the helical grooves are formed at an exit angle approximately equal to an average near surface combustor flow angle.

9. The aft liner seal of claim 6, wherein
(a) the inner shell is integral to the outer shell, and/or
(b) the outer shell is shrink fitted to the inner shell.

10. A gas turbine, comprising:
(a) a compressor for supplying compressed air;
(b) a plurality of combustors, for receiving compressed air from the compressor and fuel through a plurality of fuel nozzles associated with each combustor, to provide hot products of combustion;
(c) a turbine for receiving the hot products of combustion from said combustors; and
(d) a plurality of combustion aft liner seals, each aft liner seal comprising:
(i) an inner shell having an inner surface and outer surface;
(ii) an outer shell positioned over said inner shell, said outer shell having an inner surface and an outer surface; and
(iii) the inner surface of the outer shell abutting the outer surface of the inner shell;
(iv) one of said outer surface of said inner shell and said inner surface of said outer shell having a plurality of helical grooves formed thereon; and
(v) said plurality of helical grooves and adjacent portions of said inner surface of said outer shell or said outer surface of said inner shell forming a plurality of helical cooling passages, said cooling passages for providing cooling air to cool said inner shell.

11. The gas turbine of claim 10, wherein said exit angle is twenty to sixty degrees.

12. The gas turbine of claim 10, wherein said exit angle is about 45 degrees.

13. The aft liner seal of claim 10, wherein the helical grooves are formed at an angle approximately equal to an average near surface combustor flow angle.

14. The gas turbine of claim 10, wherein the inner shell is integral to the outer shell.

15. The gas turbine of claim 10, wherein the outer shell is shrink fitted to the inner shell.
